# EUROPÄISCHE PATENTSCHRIFT

(11) **EP 1 468 869 B1**
(45) Veröffentlichungstag und Bekanntmachung des Hinweises auf die Patenterteilung: **09.09.2009**
(21) Anmeldenummer: 04004789.6
(22) Anmeldetag: 02.03.2004
(51) Int. Cl.: B60N 2/38, B60N 2/42, B60N 2/30

(54) **Einrichtung zur Positionierung eines Besatzungsmitglieds eines Fahrzeugs**
Device for the positioning of a crew member of a vehicle
Dispositif pour positionner un membre de l'équipage d'un véhicule

(30) Priorität: 14.04.2003 DE 10317314
(43) Veröffentlichungstag der Anmeldung: 20.10.2004
(73) Patentinhaber: Schroth Safety Products GmbH, 59757 Arnsberg (DE)
(72) Erfinder: Schroth, Carl-Jürgen, 59494 Soest (DE)
(74) Vertreter: Griepenstroh, Jörg

(56) Entgegenhaltungen:
- EP-A- 1 127 788
- EP-A- 1 293 378
- WO-A-03/004958
- DE-A1- 3 741 101
- FR-A- 2 120 503
- GB-A- 1 565 069
- US-A- 3 625 563

## Beschreibung

Die Erfindung betrifft eine Einrichtung zur Positionierung eines Besatzungsmitglieds eines Fahrzeugs im Bereich einer verschließbaren Dachluke.

Fahrzeuge, insbesondere gepanzerte Fahrzeuge, die vom Militär, aber auch von der Polizei genutzt werden, weisen in der Regel mehrere Besatzungsmitglieder auf. Ein Besatzungsmitglied, der sogenannte Kommandant, hat die Aufgabe, die Situationen im Umfeld eines Fahrzeugs zu erkennen und Schlussfolgerungen aus der jeweiligen Umfeldsituation gegebenenfalls an weitere Besatzungsmitglieder im Fahrzeug weiter zu geben.

Um dem Kommandanten die Möglichkeit zu verschaffen, die Umfeldsituation einwandfrei wahrnehmen zu können, besitzt ein in Rede stehendes Fahrzeug eine Dachluke, die durch einen zumeist manuell schwenkbaren Lukendeckel verschließbar ist. Ist der Lukendeckel von der Dachluke weg geschwenkt, kann der Kommandant in der Dachluke stehen und seiner Beobachtungsaufgabe nachkommen. Zu diesem Zweck steht der Kommandant meistens auf einem Sitz einer Sitzformation, manchmal sogar provisorisch auf einer Rückenlehne einer solchen Sitzformation.

So lange sich das Fahrzeug auf einer relativ ebenen Fläche bewegt, unterliegt der Kommandant keinen besonderen Problemen in der Durchführung seiner Aufgabe. Da das Fahrzeug neben den natürlichen Bewegungen und Bremsvorgängen aber auch starken räumlichen Schwingungen ausgesetzt sein kann, insbesondere im Gelände, muss sich der Kommandant gegen ein Anschlagen seines Oberkörpers gegen den Rand der Dachluke dadurch schützen, dass er seinen Oberkörper weit aus der Dachluke heraus ragen lässt und er sich mit seinen Händen an äußeren Teilen des Fahrzeugs festhalten und auf diese Weise seine Position stabilisieren kann.

Nun bildet es aber einen nicht so seltenen Tatbestand, dass sich ein gepanzertes Fahrzeug im Gelände überschlägt. In einem solchen Fall hat der Kommandant häufig kaum eine Chance, sich während eines beginnenden Überschlags durch die Dachluke in das Innere des Fahrzeugs zurück zu ziehen, um sich dort zu sichern. Vielmehr wird der Kommandant oft aus dem Fahrzeug geschleudert und sogar vom eigenen Fahrzeug erschlagen.

Ein besonders gefährlicher Zustand tritt für einen Kommandanten dann ein, wenn sein Fahrzeug auf eine Mine fährt, diese explodiert und das Fahrzeug dadurch eine erzwungene Kippbewegung vollzieht. Auch wird eine starke Schockwelle durch den mit dem Fahrzeugboden gekoppelten Sitz in die Unterund Oberschenkel sowie die Wirbelsäule des Kommandanten geleitet, wenn das Fahrzeug aufgrund der Minenexplosion eine erhebliche vertikale Beschleunigung erfährt.

Um den vorbeschriebenen Problemen gerecht zu werden, hat die Praxis vorgeschlagen, einen Kommandanten in normaler Sitzposition auf einem mechanisch liftbaren Sitz mittels eines Sicherheitsgurts zu halten und den Kommandanten dann so weit mit dem Sitz zu liften, dass er aus der Dachluke schauen und das Umfeld beobachten kann.

Bei diesem Vorschlag ist der Kommandant durch den Sicherheitsgurt zwar relativ gut an der Sitzformation fixiert, die Sitzformation ist aber nicht vom Fahrzeugboden entkoppelt. Folglich muss der Kommandant alle Bewegungen des Fahrzeugs mit vollziehen, so dass er teilweise außerordentlichen Beschleunigungskräften ausgesetzt ist. Außerdem hat eine solche Sitzformation den Nachteil, dass die gesamte Masse der Sitzformation einschließlich des auf der Sitzformation festgeschnallten Kommandanten angehoben und abgesenkt werden muss. Da aber im Fahrzeug in aller Regel keine hydraulischen, weil brennbaren, Flüssigkeiten verwendet werden, muss das Liften mechanisch erfolgen. Überschlägt sich aber ein Fahrzeug oder fährt das Fahrzeug auf eine Mine, die dann explodiert, ist es folglich kaum möglich, die Sitzformation mit dem Kommandanten innerhalb der dann notwendigen kurzen Reaktionszeit von Bruchteilen einer Sekunde soweit in das Fahrzeug zu verlagern, dass er sich nicht mehr in dem Gefahrenbereich der Dachluke befindet.

Lift mechanismen von derartigen Sitzen sind z.B. aus der DE 37 41 101 A oder der GB 1 565 069 A bekannt.

Ein weiterer Nachteil beim mechanischen Liften einer Sitzformation besteht darin, dass die Sitzformation in ihrer obersten Position die Dachluke versperrt und ein auf der Sitzformation sitzender Kommandant auch nach einer Trennung von einem Sicherheitsgurt sich meistens nicht strecken kann, um über die Dachluke mit geraden Beinen das Fahrzeug verlassen zu können. Weder ihm, noch gegebenenfalls den anderen Besatzungsmitgliedern des Fahrzeugs ist demzufolge eine Flucht aus dem Fahrzeug bei einer in der obersten Position fixierten Sitzformation möglich.

Weiterhin, um Platzverhältnisse für Insassen zu verbessern, sind z.B. in allgemeiner Form verstandbare Sitze von Personenbeförderungsfahrzeugen wie z.B. der FR 2 120 503 A bekannt.

Des Weiteren besteht die Gefahr, dass bei einer Minenexplosion und den dadurch hervorgerufenen außerordentlich hohen Beanspruchungen die Sitzformation in der obersten Position verklemmt, mechanisch nicht mehr abwärts bewegbar ist und somit die Dachluke als Fluchtweg dauerhaft versperrt.

Der Erfindung liegt - ausgehend vom Stand der Technik - die Aufgabe zugrunde, eine Einrichtung zur Positionierung eines Besatzungsmitglieds eines Fahrzeugs im Bereich einer verschließbaren Dachluke zu schaffen, die es einerseits dem Besatzungsmitglied in der Dachluke stehend erlaubt, seine Beobachtungsfunktion ordnungsgemäß wahrnehmen zu können und welche andererseits sicherstellt, dass das Besatzungsmitglied in den sicheren Innenraum des Fahrzeugs gelangen kann, wenn das Fahrzeug einem Unfall mit der Möglichkeit des Kippens oder einer vertikalen Beschleunigung ausgesetzt ist.

Diese Aufgabe wird mit den im Patentanspruch 1 angegebenen Merkmalen gelöst.

Die Erfindung sieht nunmehr ein in dem Fahrzeug unterhalb der Dachluke hängend befestigtes Tragegestell vor. Einem vertikalen Schenkel des Tragegestells ist eine horizontale Standfläche für das Besatzungsmitglied, also insbesondere einem Kommandanten, zugeordnet. Die hängende Anordnung des Tragegestells ist mit dem Vorteil verbunden, dass keine Kraftkopplung mit dem Fahrzeugboden existiert und somit, z.B. bei einer Minenexplosion, jede Schockwellendurchleitung vermieden wird.

An dem vertikalen Schenkel des Tragegestells ist eine Rückenlehne einer Sitzformation für das Besatzungsmitglied vertikal zwangsgeführt. Diese Sitzformation umfasst neben der Rückenlehne eine mit deren unterem Ende schwenkbar verbundene Sitzfläche, eine zwischen die Sitzfläche und die Standfläche schwenkbar eingegliederte Koppelstrebe sowie einen der Sitzformation zugeordneten Sicherheitsgurt. Da die Rückenlehne permanent in Richtung auf ihre oberste Position federnd belastet ist, haben in dieser Grundstellung die einzelnen Elemente der Sitzformation, also die Rückenlehne, die Sitzfläche und die Koppelstrebe eine nahezu gestreckte vertikale Konfiguration. Jedes Besatzungsmitglied des Fahrzeugs kann demzufolge bei geöffnetem Lukendeckel über die Dachluke problemlos in das Fahrzeug gelangen und auch ebenso einfach das Fahrzeug verlassen.

Ist der Kommandant als letztes Besatzungsmitglied in das Fahrzeug eingestiegen, steht er auf der Standfläche und kann sich über den Sicherheitsgurt, insbesondere einen Hosenträgergurt, an der Sitzformation, vorzugsweise an ihrer Rückenlehne, festschnallen. Die Entfernung der Standfläche von der Dachluke ist so bemessen, dass die mittlere Größe eines männlichen Besatzungsmitglieds vorausgesetzt wird und das Besatzungsmitglied dann in der Dachluke das Umfeld beobachten kann. Es braucht sich nicht mehr am Fahrzeug fest zu halten und kann mit seinen Händen weitere Tätigkeiten verrichten.

Will sich das Besatzungsmitglied setzen, so braucht es lediglich die Oberschenkel gegenüber den Unterschenkeln abzuwinkeln, wobei das Gewicht des Oberkörpers ausreicht, um die die Sitzformation in der gestreckten Konfiguration haltende Federkraft zu überwinden und die Sitzformation zusammen zu klappen, bis dass das Besatzungsmitglied in der bezüglich der einzelnen Elemente abgewinkelten Konfiguration der Sitzformation eine anatomisch korrekte sitzende Stellung unter Verlagerung der Rückenlehne entlang des vertikalen Schenkels des Tragegestells eingenommen hat.

Durch anthropometrische Untersuchungen hat man heraus gefunden, dass die Länge der Oberschenkel eines mittleren erwachsenen Mannes ca. 400 mm beträgt. Diese 400 mm wurden dann im Rahmen von ergonomischen Untersuchungen als ausreichender Verlagerungsweg des Kopfes eines Besatzungsmitglieds aus dessen sitzender Position in eine stehende Position ermittelt; Strecken und Beugen der Oberschenkel relativ zu den Unterschenkeln.

Das Besatzungsmitglied kann mithin normalerweise durch eigene Muskelkraft die sitzende Position in Richtung zur stehenden Position verlassen, wobei die Federkraft die Sitzformation durch Verlagerung der Rückenlehne entlang des vertikalen Schenkels des Tragegestells unter Streckung von Koppelstrebe, Sitzfläche und Rückenlehne nachführt. Auch braucht das Besatzungsmitglied nur das Gewicht des Oberkörpers einzusetzen, um gegen diese Federkraft aus der stehenden Position in die gesicherte sitzende Position im Fahrzeug zu gelangen. Eine Beeinträchtigung durch den Sicherheitsgurt erfolgt hierbei nicht.

Ist das Fahrzeug einer Minenexplosion mit dadurch bedingter vertikaler Beschleunigung des Fahrzeugs ausgesetzt, so führt das Beharrungsvermögen des Körpers des Besatzungsmitglieds in stehender Position dazu, dass das Besatzungsmitglied die Sitzformation in Richtung zum Fahrzeugboden belastet und damit das Besatzungsmitglied in die sitzende Position im Fahrzeuginneren verlagert wird. Da bei diesem Bewegungsvorgang automatisch eine Abwinklung der Rückenlehne zur Sitzfläche, der Sitzfläche zur Koppelstrebe und der Koppelstrebe zur Standfläche stattfindet, werden auch die Kniegelenke des Besatzungsmitglieds abgewinkelt, so dass durch das Gewicht des Oberkörpers bedingte längs gerichtete Lasten keine negativen Auswirkungen mehr auf die Unterschenkel und Oberschenkel des Besatzungsmitglieds ausüben können. Darüber hinaus werden auch gefährliche längs gerichtete Kräfte auf die Wirbelsäule des Besatzungsmitglieds zumindest erheblich gemindert, wenn nicht sogar ganz vermieden.

Bei der Gefahr von Überschlägen kann das Besatzungsmitglied ebenfalls, und zwar angeschnallt an die Sitzformation, unverzüglich die sitzende Position einnehmen, wobei lediglich die Federkraft überwunden werden muss, welche die Sitzformation permanent in Richtung auf ihre gestreckte Konfiguration belastet.

Das Tragegestell kann hinsichtlich des vertikalen Schenkels so ausgebildet sein, dass die Rückenlehne der Sitzformation an dem Schenkel entlang gleitend oder rollend zwangsgeführt wird. Auch kann das Tragegestell insgesamt so ausgelegt sein, dass es ein möglichst geringes Gewicht bei dennoch einwandfreier Verwindungsstabilität aufweist.

Damit das Besatzungsmitglied in der stehenden Position eine bessere Rundumsicht hat, ist entsprechend den Merkmalen des Patentanspruchs 2 vorgesehen, dass das Tragegestell um eine vertikale Achse drehbar ist. Zu diesem Zweck kann das obere Ende des Tragegestells an einer gebogenen Schiene zwangsgeführt sein (gleitend oder rollend), die sich im Fahrzeuginneren, vorzugsweise über etwa 180°, entlang des Rands der Dachluke erstreckt. Dadurch kann sich das Besatzungsmitglied um ca. 90° nach links und rechts drehen, ohne hierbei Zwängungen ausgesetzt zu sein.

Obwohl es denkbar ist, dass die die Sitzformation in Richtung auf die gestreckte Konfiguration permanent belastende Federkraft durch wenigstens eine Torsionsfeder in den Gelenkbereichen zwischen der Rückenlehne und der Sitzfläche oder zwischen der Sitzfläche und der Koppelstrebe oder zwischen der Koppelstrebe und der Standfläche gebildet sein kann, sind auch linear arbeitende Motoren sowie rotatorisch wirkende Servomotoren, insbesondere durch Sensoren angesteuert, denkbar. Besonders vorteilhaft ist jedoch gemäß Patentanspruch 3, dass die Sitzformation unter den Einfluss mindestens einer in Richtung auf ihre gestreckte Konfiguration wirksamen Gasdruckfeder gestellt ist. Eine Gasdruckfeder ist ein einfaches und wartungsarmes Bauteil. Sie kann beispielsweise zwischen die Gelenke eingegliedert sein, welche einerseits die Rückenlehne mit der Sitzfläche und andererseits die Koppelstrebe mit der Standfläche verbinden. Ferner ist es möglich, dass eine solche Gasdruckfeder einerseits an das Tragegestell und andererseits an die Rückenlehne angelenkt ist. Auch sind andere Integrationen einer Gasdruckfeder in die Sitzformation vorstellbar. Es muss nur stets gewährleistet sein, dass eine permanente Belastung der Sitzformation in Richtung auf ihre gestreckte Konfiguration vorhanden ist.

Die Stärke einer solchen Gasdruckfeder braucht lediglich so bemessen zu werden, dass sie der verschiebbaren Masse, bestehend im Wesentlichen aus der Rückenlehne mit Sicherheitsgurt und der Sitzfläche, die notwendige Verlagerungskraft entgegensetzen kann.

Entsprechend den Merkmalen des Patentanspruchs 4 kann die Sitzformation in ihrer gestreckten Konfiguration verriegelbar sein. Hierfür kann ein Hebel/Hakensystem vorgesehen werden, das selbstständig eine Verriegelung vornimmt, wenn die Sitzformation die gestreckte Konfiguration eingenommen hat. Die Verriegelung kann manuell gelöst werden, wenn das Besatzungsmitglied die sitzende Position einnehmen möchte. Auch ist es vorstellbar, dass in einem Notfall die Verriegelung durch eine externe Ansteuerung aufgehoben wird.

In Weiterbildung des erfindungsgemäßen Grundgedankens ist nach Patentanspruch 5 vorgesehen, dass die Sitzformation unter dem Einfluss einer durch mindestens einen Sensor gesteuerten, die Sitzfläche in eine horizontale Position verlagernden Stelleinheit steht. Eine solche Stelleinheit, die an der Fahrzeugstruktur, vorzugsweise aber an der Sitzformation befestigt ist, soll insbesondere sowohl bei einem Überschlag des Fahrzeugs als auch bei einer Minenexplosion mit einer dadurch hervor gerufenen vertikalen Beschleunigung des Fahrzeugs aktiv werden. Sie sorgt dann dafür, dass eine eventuelle Verriegelung der Sitzformation in der gestreckten Konfiguration aufgehoben und die Sitzformation mit dem angeschnallten Besatzungsmitglied in kürzester Zeit in die abgewinkelte untere Konfiguration verlagert wird, in welcher die Sitzfläche horizontal ausgerichtet ist. Der Sensor ist an der Sitzformation, vorzugsweise aber an der Fahrzeugstruktur befestigt.

Entsprechend den Merkmalen des Patentanspruchs 6 kann die Stelleinheit durch einen Gasgenerator gebildet sein. Ein solcher Gasgenerator ist dann beispielsweise mit einer Gasdruckfeder verbunden oder er kann ein separates Antriebsmittel aktivieren, durch die dann ebenfalls die Sitzformation in Bruchteilen einer Sekunde von der oberen gestreckten in die untere abgewinkelte Konfiguration verlagert wird.

Die mit einer solchen Zwangsverlagerung der Sitzformation verbundene starke Beschleunigung des Oberkörpers des Besatzungsmitglieds wird gemäß Patentanspruch 7 dadurch verträglich abgebremst, dass der Sitzformation eine nach unten gerichtete Beschleunigung dämpfende Mittel zugeordnet sind. Diese werden erst mit der Aktivierung durch die Stelleinheit wirksam, um unter normalen Betriebsbedingungen eine Änderung von der oberen gestreckten in die untere abgewinkelte Konfiguration nicht zu behindern.

Es kann aber auch der vertikale Schenkel des Tragegestells so gestaltet sein, dass er sich unter dem Einfluss vorbestimmter längsgerichteter Kräfte um begrenzte Wege verlängert oder staucht und somit Energie gewandelt wird. Solche dämpfenden Mittel tragen dazu bei, dass in der Verlagerungsphase von der oberen gestreckten in die untere abgewinkelte Konfiguration die dann auftretenden gefährlichen längs gerichteten Kräfte keine negativen Auswirkungen, insbesondere auf die Wirbelsäule des Besatzungsmitglieds, ausüben können.

Die dämpfenden Mittel können sofort zu Beginn der Zwangsverlagerung wirksam werden. Es ist aber auch denkbar, dass sie erst in der Endphase der Verlagerung ihre Wirksamkeit entfalten.

Eine ergonomisch einwandfreie Haltung des Besatzungsmitglieds in stehender Position wird entsprechend den Merkmalen des Patentanspruchs 8 dann erzielt, wenn der vertikale Schenkel des Tragegestells und die Standfläche durch mindestens einen Schrägschenkel miteinander verbunden sind. Dadurch befindet sich die Standfläche im Wesentlichen axial unterhalb der Dachluke.

Auch die Merkmale des Patentanspruchs 9 tragen mit dazu bei, dass das Besatzungsmitglied sowohl in der stehenden als auch in der sitzenden Position keinen zusätzlichen negativen Beanspruchungen ausgesetzt ist. Die Standfläche kann hierbei relativ zum Schrägschenkel als auch relativ zur Koppelstrebe verlagerbar sein. Denkbar ist aber auch eine Längenveränderung der z.B. durch eine Platte gebildeten Standfläche.

Zur weiteren Verbesserung der Standfestigkeit des Besatzungsmitglieds, insbesondere in der stehenden Position, ist gemäß Patentanspruch 10 vorgesehen, dass der Standfläche die Schuhe des Besatzungsmitglieds lagefixierende Mittel zugeordnet sind. Solche Mittel können beispielsweise Schlaufen sein, welche die Schuhe des Besatzungsmitglieds auf der Standfläche gegen Abrutschen sichern.

Die Erfindung ist nachfolgend anhand von in den Zeichnungen dargestellten Ausführungsbeispielen näher erläutert. Es zeigen:
- Figur 1: im Vertikalschnitt im Schema einen Teil eines gepanzerten Fahrzeugs mit einem Besatzungsmitglied in stehender Position;
- Figur 2: die Darstellung der Figur 1 mit dem Besatzungsmitglied in sitzender Position;
- Figur 3: in der Seitenansicht ein Tragegestell mit einer Sitzformation für ein Besatzungsmitglied;
- Figur 4: eine Draufsicht auf die Darstellung der Figur 3 zusammen mit einer horizontal und bogenförmig verlaufenden Zwangsführung und
- Figur 5: eine weitere Ausführungsform eines Tragegestells mit Sitzformation in der Frontalansicht.

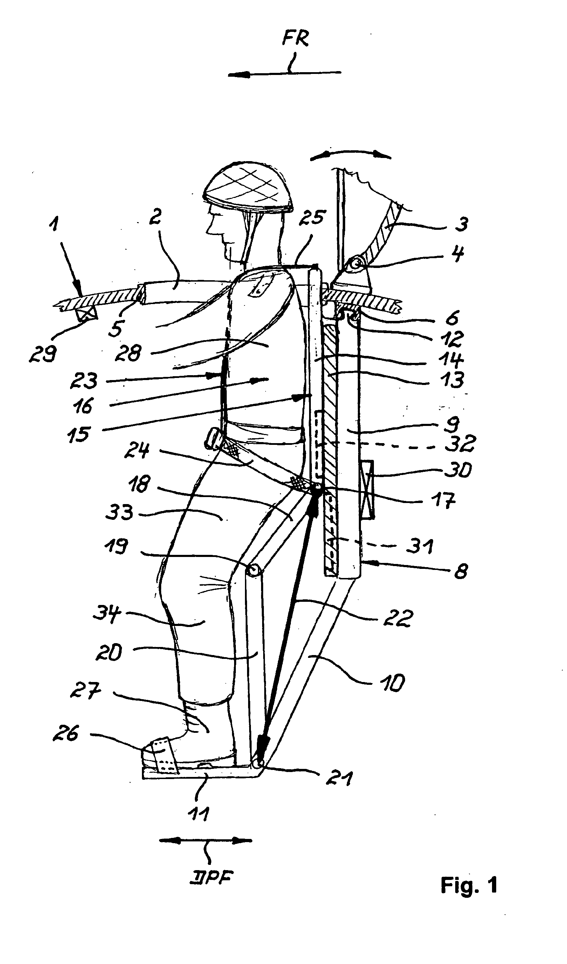

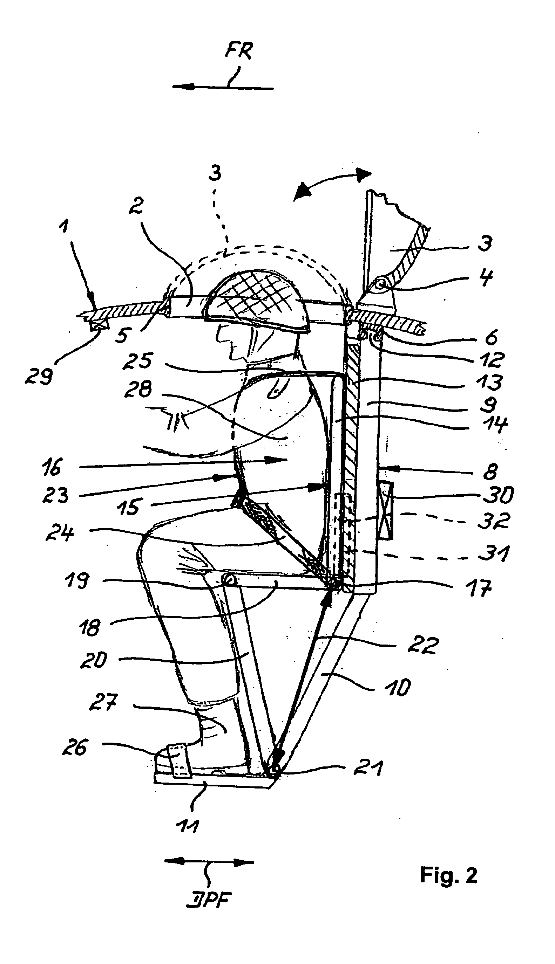

Mit 1 ist in den Figuren 1 und 2 ein gepanzertes Fahrzeug im Bereich einer verschließbaren Dachluke 2 angedeutet. Die Dachluke 2 ist durch einen schwenkbaren Lukendeckel 3 verschließbar. Die horizontale Schwenkachse des Lukendeckels 3 ist mit 4 bezeichnet. Die Verschließmechanismen des Lukendeckels 3 sind nicht näher veranschaulicht.

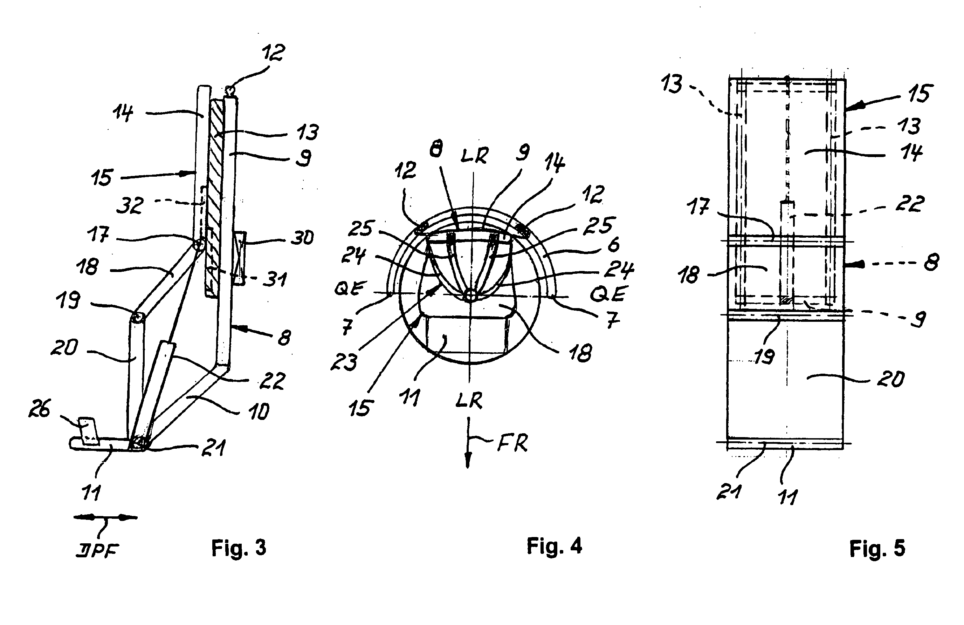

Wie die Figuren 1, 2 und 4 zu erkennen geben, erstreckt sich im Innern des Fahrzeugs 1 entlang des Rands 5 der Dachluke 2 eine im Querschnitt etwa U-förmige Schiene 6 über etwa 180°. An dieser Schiene 6 ist ein Tragegestell 8 entlang verlagerbar (Figuren 1 bis 4), das über einen vertikalen Schenkel 9, einen Schrägschenkel 10 und eine Standfläche 11 in Form einer Platte verfügt. Die Standfläche 11 ist gegenüber dem Schrägschenkel 10 in Richtung des Doppelpfeils DPF verlagerbar. Die Verlagerbarkeit ist nicht näher dargestellt. Zur Verlagerung des Tragegestells 8 nach rechts oder links um ca. 90° besitzt der vertikale Schenkel 9 am oberen Ende Gleitschuhe 12, welche in die Schiene 6 fassen. Die Enden 7 der Schiene 6 verlaufen in einer Querebene QE zur Längsrichtung LR des Fahrzeugs 1 (Figur 4). Sie weisen in Fahrtrichtung FR.

Am vertikalen Schenkel 9 des Tragegestells 8 ist ein Schienensystem 13 vorgesehen, an dem entlang eine Rückenlehne 14 einer Sitzformation 15 für ein Besatzungsmitglied 16 des Fahrzeugs 1, insbesondere für den Kommandanten des Fahrzeugs 1, vertikal verlagerbar ist. Die Sitzformation 15 setzt sich aus der Rückenlehne 14, einer mit der Rückenlehne 14 über eine horizontale Schwenkachse 17 verbundenen Sitzfläche 18 und einer mit der Sitzfläche 18 über eine horizontale Schwenkachse 19 verbundenen Koppelstrebe 20 zusammen. Die z.B. als Platte ausgebildete Koppelstrebe 20 ist wiederum über eine horizontale Schwenkachse 21 im Verbindungsbereich der Standfläche 11 mit dem Schrägschenkel 10 angelenkt.

Durch Integration einer Gasdruckfeder 22 in die Sitzformation 15 (in den Figuren 1 und 2 nur durch einen Doppelpfeil dargestellt) wird die Rückenlehne 14 der Sitzformation 15 permanent in Richtung auf die oberste Position der Rückenlehne 14 gemäß Figur 1 beaufschlagt. Das heißt, Rückenlehne 14, Sitzfläche 18 und Koppelstelle 20 nehmen eine quasi gestreckte Konfiguration ein. Die Gasdruckfeder 22 ist einerseits an die Schwenkachse 21 der Koppelstrebe 20 mit der Standfläche 11 und andererseits an die Schwenkachse 17 zwischen der Rückenlehne 14 und der Sitzfläche 18 angelenkt.

Das Besatzungsmitglied 16 ist über einen Sicherheitsgurt 23 in Form eines Hosenträgergurts an die Rückenlehne 14 geschnallt. Der Sicherheitsgurt 23 verfügt über Beckengurte 24 sowie über Schultergurte 25.

Bei aufgeklapptem Lukendeckel 3 nimmt das Besatzungsmitglied 16 eine quasi stehende Position ein (Figur 1). In dieser Position hat das Besatzungsmitglied 16 die Möglichkeit, das Umfeld des Fahrzeugs 1 zu beobachten. Hierzu kann es sich mit dem Tragegestell 8 entlang der Schiene 6 um eine vertikale Achse begrenzt um etwa 90° nach links und rechts drehen. Zur besseren Standsicherheit des Besatzungsmitglieds 16 sind der Standfläche 11 Schlaufen 26 zugeordnet, in welchen die Schuhe 27 des Besatzungsmitglieds 16 Halt finden.

Will sich das Besatzungsmitglied 16 aus der stehenden Position gemäß Figur 1 in die sitzende Position gemäß Figur 2 bewegen, braucht es lediglich das Gewicht des Oberkörpers 28 einzusetzen, um die Ausstellkraft der Gasdruckfeder 2 zu überwinden, so dass die Rückenlehne 14 entlang des Schienensystems 13 nach unten gleitet, bis dass die Sitzfläche 18 eine horizontale Lage eingenommen hat. Parallel hierzu kann der Lukendeckel 3 auf die Dachluke 2 herab geklappt und am Fahrzeug 1 lagefixiert werden.

Mit 29 ist ein der Fahrzeugstruktur zugeordneter Sensor bezeichnet, welcher auf Beschleunigungen des Fahrzeugs 1 bei Überschlägen oder Minenexplosionen reagiert. Dieser Sensor 29 steuert eine Stelleinheit 30, beispielsweise in Form eines Gasgenerators, die dem vertikalen Schenkel 9 des Tragegestells 8 zugeordnet und mit der Gasdruckfeder 22 gekoppelt ist.

Wird das Fahrzeug 1 und damit auch das Besatzungsmitglied 16 durch eine Minenexplosion einer vertikalen Beschleunigung ausgesetzt, reagiert der Sensor 29 und aktiviert die Stelleinheit 30 dahingehend, dass die Gasdruckfeder 22 aus der Position gemäß Figur 1 in die Position gemäß Figur 2 zusammengefahren wird, so dass das über den Sicherheitsgurt 23 an der Rückenlehne 14 festgeschnallte Besatzungsmitglied 16 aus der gefährdeten stehenden Position in die sichere sitzende Position im Innern des Fahrzeugs 1 gemäß Figur 2 verlagert wird.

Um bei dieser Verlagerung während des gesamten Verlagerungswegs oder zumindest am Ende des Verlagerungswegs die Beschleunigung zu bremsen, sind zwischen der Rückenlehne 14 und dem Schienensystem 13 des Tragegestells 8 Dämpfungsmittel 31, 32 vorgesehen, durch welche vertikale Belastungen auf die Oberschenkel 33 und Unterschenkel 34 sowie die Wirbelsäule des Besatzungsmitglieds 16 zumindest erheblich vermindert werden.

Will das Besatzungsmitglied 16 wieder aufstehen und die Position gemäß Figur 1 einnehmen, so braucht es lediglich die eigene Muskelkraft zu aktivieren. Die Gasdruckfeder 22 sorgt dann dafür, dass die Sitzformation 15 aus der abgewinkelten Konfiguration gemäß Figur 2 in die nahezu gestreckte Konfiguration gemäß Figur 1 überführt wird.

In der Figur 5 ist eine Ausführungsform dargestellt, bei welcher sowohl das Tragegestell 8 als auch die Sitzformation 15 so ausgebildet sind, wie das Tragegestell 8 und die Sitzformation 15 der Figuren 1 bis 4. Allerdings ist zu erkennen, dass nunmehr eine Gasdruckfeder 22 einerseits an den vertikalen Schenkel 9 des Tragegestells 8 und andererseits an die Rückenlehne 14 der Sitzformation 15 angelenkt ist.

### Bezugszeichenaufstellung

- 1 -: Fahrzeug
- 2 -: Dachluke
- 3 -: Lukendeckel
- 4 -: Schwenkachse v. 3
- 5 -: Rand v. 2
- 6 -: Schiene
- 7 -: Enden v. 6
- 8 -: Tragegestell
- 9 -: vertikaler Schenkel v. 8
- 10 -: Schrägschenkel v. 8
- 11 -: Standfläche v. 8
- 12 -: Gleitschuhe an 9
- 13 -: Schienensystem
- 14 -: Rückenlehne v. 15
- 15 -: Sitzformation
- 16 -: Besatzungsmitglied v. 1
- 17 -: Schwenkachse zw. 14 u. 18
- 18 -: Sitzfläche v. 15
- 19 -: Schwenkachse zw. 18 u. 20
- 20 -: Koppelstrebe
- 21 -: Schwenkachse zw. 20 u. 10, 11
- 22 -: Gasdruckfeder
- 23 -: Sicherheitsgurt
- 24 -: Beckengurte v. 23
- 25 -: Schultergurte v. 23
- 26 -: Schlaufen an 11
- 27 -: Schuhe v. 16
- 28 -: Oberkörper v. 16
- 29 -: Sensor
- 30 -: Stelleinheit
- 31 -: Dämpfungsmittel
- 32 -: Dämpfungsmittel
- 33 -: Oberschenkel v. 16
- 34 -: Unterschenkel v. 16

- DPF -: Doppelpfeil
- FR -: Fahrtrichtung v. 1
- LR -: Längsrichtung v. 1
- QE -: Querebene zu LR

## Patentansprüche

1. Einrichtung zur Positionierung eines Besatzungsmitglieds (16) eines Fahrzeugs (1) im Bereich einer verschließbaren Dachluke (2), welche ein in dem Fahrzeug (1) unterhalb der Dachluke (2) hängend befestigtes Tragegestell (8) mit einer horizontalen Standfläche (11), eine an einem vertikalen Schenkel (9) des Tragegestells (8) senkrecht geführte, permanent in Richtung auf ihre oberste Position federnd belastete Rückenlehne (14) einer Sitzformation (15) für das Besatzungsmitglied (16), eine mit dem unteren Ende der Rückenlehne (14) schwenkbar verbundene Sitzfläche (18), eine zwischen die Sitzfläche (18) und die Standfläche (11) schwenkbar eingegliederte Koppelstrebe (20) sowie einen der Sitzformation (15) zugeordneten Sicherheitsgurt (23) aufweist.

2. Einrichtung nach Patentanspruch 1, bei welcher das Tragegestell (8) um eine vertikale Achse drehbar ist.

3. Einrichtung nach Patentanspruch 1 oder 2, bei welcher die Sitzformation (15) unter den Einfluss mindestens einer in Richtung auf ihre gestreckte Konfiguration wirksamen Gasdruckfeder ( 22) gestellt ist.

4. Einrichtung nach einem der Patentansprüche 1 bis 3, bei welcher die Sitzformation (15) in ihrer gestreckten Konfiguration verriegelbar ist.

5. Einrichtung nach einem der Patentansprüche 1 bis 4, bei welcher die Sitzformation (15) unter dem Einfluss einer durch mindestens einen Sensor (29) gesteuerten, die Sitzfläche (18) in eine horizontale Position verlagernden Stelleinheit (30) steht.

6. Einrichtung nach Patentanspruch 5, bei welcher die Stelleinheit (30) durch einen Gasgenerator gebildet ist.

7. Einrichtung nach einem der Patentansprüche 1 bis 6, bei welcher dem Tragegestell (8) und der Sitzformation (15) eine nach unten gerichtete Beschleunigung dämpfende Mittel (31, 32) zugeordnet sind.

8. Einrichtung nach einem der Patentansprüche 1 bis 7, bei welcher der vertikale Schenkel (9) des Tragegestells (8) und die Standfläche (11) durch einen Schrägschenkel (10) miteinander verbunden sind.

9. Einrichtung nach Patentanspruch 8, bei welcher die Standfläche (11) in horizontaler Richtung verlagerbar ist.

10. Einrichtung nach einem der Patentansprüche 1 bis 9, bei welcher der Standfläche (11) die Schuhe (27) des Besatzungsmitglieds (16) lagefixierende Mittel (26) zugeordnet sind.

## Claims

1. Device for the positioning of a crew member (16) of a vehicle (1) in the area of a closable roof hatch (2), which has a frame (8) fixed suspended underneath the roof hatch (2) in the vehicle (1) with a horizontal standing plate (11), a seat backrest (14) of a seating formation (15) for the crew member (16), said backrest being vertically guided on a vertical limb (9) of the frame (8), permanently spring-loaded in the direction of its uppermost position, a seating surface (18) linked with the lower end of the backrest (14) so as to swivel, a linking spacer (20) integrated between the seating surface (18) and the standing plate (11) so as to swivel, and a safety belt (23) assigned to the seating formation (15).

2. Device according to claim 1, in which the frame (8) is rotatable about a vertical axis.

3. Device according to claim 1 or 2, in which the seating formation (15) is acted upon by at least one gas pressure spring (22) acting in the direction of its extended configuration.

4. Device according to one of claims 1 to 3, in which the seating formation (15) can be locked into its extended configuration.

5. Device according to one of claims 1 to 4, in which the seating formation (15) is acted upon by an actuating unit (30) controlled by at least one sensor (29), moving the seating surface (18) into a horizontal position.

6. Device according to claim 5, in which the actuating unit (30) consists of a gas generator.

7. Device according to one of claims 1 to 6, in which downward-pointing acceleration-damping means (31, 32) are assigned to the frame (8) and the seating formation (15).

8. Device according to one of claims 1 to 7, in which the vertical limb (9) of the frame (8) and the standing plate (11) are joined together by an angled limb (10).

9. Device according to claim 8, in which the standing plate (11) is displaceable in the horizontal direction.

10. Device according to one of claims 1 to 9, in which means (26) for fixing the position of the shoes (27) of the crew member (16) are assigned to the standing plate (11).

## Revendications

1. Système pour positionner un membre d'équipage (16) d'un véhicule (1) dans la région d'une écoutille de toit (2) susceptible d'être refermée, qui comprend une ossature portante (8), fixée en suspension dans le véhicule (1) au-dessous de l'écoutille de toit (2), avec une surface de séjour horizontale (11), un dossier (14), appartenant à une formation de type siège (15) pour le membre d'équipage (16), guidé verticalement sur une branche verticale (9) de l'ossature portante (8) et chargé par ressort en permanence en direction de sa position la plus haute, une surface d'assise (18) reliée en pivotement à l'extrémité inférieure du dossier (14), une entretoise d'accouplement (20) agencée en pivotement entre la surface d'assise (18) et la surface de séjour (11), ainsi que qu'une ceinture de sécurité (23) associée à la formation de type siège (15).

2. Système selon la revendication 1, dans lequel l'ossature porteuse (8) est en rotation autour d'un axe vertical.

3. Système selon la revendication 1 ou 2, dans lequel la formation de type siège (15) est soumise à l'influence d'au moins un ressort à gaz sous pression (22) agissant en direction de sa configuration en extension.

4. Système selon l'une des revendications 1 à 3, dans lequel la formation de type siège (15) est susceptible d'être verrouillée dans sa configuration en extension.

5. Système selon l'une des revendications 1 à 4, dans lequel la formation de type siège (15) est soumise à l'influence d'une unité de positionnement (30), commandée par au moins un capteur (29), et déplaçant la surface d'assise (18) dans une position horizontale.

6. Système selon la revendication 5, dans lequel l'unité de positionnement (30) est formée par un générateur à gaz.

7. Système selon l'une des revendications 1 à 6, dans lequel des moyens (31, 32) qui amortissent une accélération dirigée vers le bas sont associés à l'ossature porteuse (8) et à la formation de type siège (15).

8. Système selon l'une des revendications 1 à 7, dans lequel la branche verticale (9) de l'ossature porteuse (8) et la surface de séjour (11) sont reliées l'une à l'autre par une branche oblique (10).

9. Système selon la revendication 8, dans lequel la surface de séjour (11) est déplaçable en direction horizontale.

10. Système selon l'une des revendications 1 à 9, dans lequel des moyens (26) qui assurent la fixation en position des chaussures (27) du membre d'équipage (16) sont associés à la surface de séjour (11).
